# EUROPÄISCHE PATENTSCHRIFT

(11) **EP 2 607 639 B1**
(45) Veröffentlichungstag und Bekanntmachung des Hinweises auf die Patenterteilung: **29.04.2020**
(21) Anmeldenummer: 12194245.2
(22) Anmeldetag: 26.11.2012
(51) Int. Cl.: F01N 1/06, F01N 3/05

(54) **Abgasanlage**
Exhaust system
Installation de gaz d'échappement

(30) Priorität: 23.12.2011 DE 102011089774
(43) Veröffentlichungstag der Anmeldung: 26.06.2013
(73) Patentinhaber: Eberspächer Exhaust Technology GmbH & Co. KG, 66539 Neunkirchen (DE)
(72) Erfinder: Neumann, Felix, 73732 Esslingen (DE); Koch, Viktor, 73035 Göppingen (DE)
(74) Vertreter: BRP Renaud & Partner mbB Rechtsanwälte Patentanwälte Steuerberater

(56) Entgegenhaltungen:
- EP-A1- 1 627 996
- DE-A1-102005 028 369
- DE-A1-102009 031 848
- JP-A- H0 895 575
- JP-A- 2001 207 843
- JP-A- 2001 221 028
- JP-U- H0 660 717

## Beschreibung

Die vorliegende Erfindung betrifft eine Abgasanlage für eine Brennkraftmaschine, insbesondere eines Kraftfahrzeugs, gemäß dem Oberbegriff des Anspruchs 1.

Eine Abgasanlage umfasst üblicherweise zumindest einen Abgasstrang, der zumindest ein Abgas führendes Abgasrohr aufweist. Der jeweilige Abgasstrang dient zum Abführen von Abgas, das in Brennräumen der Brennkraftmaschine entsteht. Je nach Größe der Brennkraftmaschine kommt die Abgasanlage mit einem einzigen Abgasstrang aus oder umfasst zumindest zwei Abgasstränge, bspw. bei einem V-Motor. Im jeweiligen Abgasstrang sind üblicherweise Abgasnachbehandlungseinrichtungen angeordnet, wie z. B. Katalysatoren, Partikelfilter, SCR-Anlagen und Schalldämpfer, die über Abgasrohre miteinander verbunden sind. Eingangsseitig umfasst ein Abgasstrang üblicherweise einen Abgassammler, sog. "Abgaskrümmer", während endseitig ein Endrohr angeordnet ist, sog. "Auspuff". Auch diese endseitigen Komponenten können mit Abgasrohren in Verbindung stehen.

Bei Schalldämpfern wird zwischen passiven Schalldämpfern und aktiven Schalldämpfern unterschieden. Die passiven Schalldämpfer dämpfen den im Abgas transportieren Luftschall mittels Resonanz-, Reflexions-, Expansions- und/oder Absorptionseffekten. Im Unterschied dazu arbeitet ein aktiver Schalldämpfer mit Gegenschall oder Antischall, der mit Hilfe eines entsprechenden elektro-akustischen Wandlers erzeugt wird, bei dem es sich in der Regel um einen Lautsprecher handelt. Ebenso sind Kombinationen aus aktiven und passiven Schalldämpfern möglich. Im vorliegenden Zusammenhang soll daher insbesondere ausgeschlossen werden, dass ein aktiver Schalldämpfer ausschließlich mit Antischall arbeitet. Vielmehr soll ein aktiver Schalldämpfer im Rahmen der vorliegenden Erfindung optional auch Eigenschaften und/oder Komponenten eines passiven Schalldämpfers umfassen können, wie z.B. wenigstens eine Resonanz-, Reflexions-, Expansions- und/oder Adsorptionskammer.

Ein aktiver Schalldämpfer kann ein Schalldämpfergehäuse und zumindest einen im Schalldämpfergehäuse angeordneten elektro-akustischen Wandler sowie zumindest ein Verbindungsrohr aufweisen. Mit Hilfe des Verbindungsrohrs kann das Schalldämpfergehäuse fluidisch mit dem Abgasrohr verbunden werden. Auf diese Weise ist das Schalldämpfergehäuse im Nebenschluss an den Abgasstrang angeschlossen, sodass es vom Abgas nicht durchströmt wird. Die fluidische Verbindung zwischen Schalldämpfergehäuse und Abgasrohr, die mit Hilfe des Verbindungsrohrs geschaffen wird, stellt dagegen eine akustische Kopplung für Luftschall sicher, sodass sich zum einen der im Abgas mitgeführte Schall in Richtung Schalldämpfergehäuse ausbreiten kann, während zum anderen der vom elektro-akustischen Wandler generierte Schall in das Abgasrohr abgestrahlt werden kann. Über das Verbindungsrohr wird außerdem eine körperliche Beabstandung zwischen Schalldämpfergehäuse und Abgasrohr realisiert, wodurch die thermische Belastung des Wandlers reduziert werden kann. Es hat sich jedoch gezeigt, dass die im Abgasrohr geführten heißen Abgase dennoch zu einer hohen thermischen Belastung des Wandlers führen können. Zum einen kann das heiße Abgas durch Diffusionsvorgänge in das Verbindungsrohr eintreten und bis zum Wandler gelangen. Zum anderen heizt das Abgas das Abgasrohr auf, sodass Wärme über Wärmeleitung von Abgasrohr über das Verbindungsrohr zum Schalldämpfergehäuse gelangen kann. Schließlich kann sich auch Wärmestrahlung vom Abgas bzw. vom Abgasrohr durch das Verbindungsrohr bis zum Wandler ausbreiten.

Um die thermische Belastung des Wandlers sowie einer ggf. ebenfalls im Schalldämpfergehäuse angeordneten Elektronik des aktiven Schalldämpfers zu reduzieren, ist es grundsätzlich möglich, das Verbindungsrohr zwischen dem Schalldämpfergehäuse und dem Abgasrohr mit einem Kühlerabschnitt auszustatten. Auf diese Weise kann das Verbindungsrohr gekühlt werden, indem über dem Kühlerabschnitt Wärme nach außen abgegeben wird. Bspw. kann das Verbindungsrohr im Kühlerabschnitt nach außen abstehende Kühlrippen aufweisen. Ebenso ist denkbar, im Kühlerabschnitt einen Kühlmantel auszubilden, der von einem Kühlmittel durchströmt wird. Bspw. kann dieser Kühlmantel an einem Kühlkreis der mit der Abgasanlage ausgestatteten Brennkraftmaschine fluidisch gekoppelt sein.

Eine gattungsgemäße Abgasanlage ist beispielsweise aus der JP 2001/221028 A bekannt und umfasst zumindest einen Abgasstrang, der zumindest ein Abgas führendes Abgasrohr aufweist. Ferner weist die bekannte Abgasanlage mindestens einen aktiven Schalldämpfer auf, der ein Schalldämpfergehäuse und wenigstens einen im Schalldämpfergehäuse angeordneten elektro-akustischen Wandler sowie wenigstens ein Verbindungsrohr aufweist, das das Schalldämpfergehäuse fluidisch mit dem Abgasrohr verbindet. Ein für die Ausbreitung von Luftschall im Verbindungsrohr ausgebildeter Schallausbreitungspfad ist für vom Abgas im Abgasrohr ausgehende Wärmestrahlung undurchlässig ausgestaltet, indem im Querschnitt des Verbindungsrohrs mehrere Blendenelemente angeordnet sind, die von einer Rohrwand des geradlinigen Verbindungsrohrs nach innen abstehen und die im Verbindungsrohr für Luftschall durchlässig angeordnet sind. Dabei verschließen die Blendenelemente den Querschnitt des Verbindungsrohrs in einer parallel zur Längsmittelachse des Verbindungsrohrs verlaufenden Blickrichtung blickdicht. Bei der bekannten Abgasanlage sind die Blendenelemente in der Umfangsrichtung verteilt und jeweils freistehend angeordnet.

Die vorliegende Erfindung beschäftigt sich mit dem Problem, für eine Abgasanlage der eingangs genannten Art eine verbesserte oder zumindest eine andere Ausführungsform anzugeben, die sich insbesondere durch eine reduzierte thermische Belastung des Wandlers auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den mit Hilfe des Verbindungsrohrs für Luftschall geschaffenen akustischen Kopplungspfad so auszugestalten, dass er für Wärmestrahlung undurchdringbar ist. Auf diese Weise wird verhindert, dass Wärmestrahlung vom Abgasstrom im Abgasrohr bzw. vom Abgasrohr auf direktem Weg durch das Verbindungsrohr hindurch zum Wandler gelangt. Auf diese Weise kann die thermische Belastung des Wandlers durch Wärmestrahlung signifikant reduziert werden.

Durch die reduzierte thermische Belastung des Wandlers sowie ggf. anderer elektronischer Komponenten im Schalldämpfergehäuse ist es außerdem möglich, den aktiven Schalldämpfer weiter stromauf, näher an der Brennkraftmaschine anzuordnen, als dies bislang möglich ist. Eine motornahe Anordnung kann für bestimmte Anforderungen von Vorteil sein.

Erfindungsgemäß wird die Verwendung mehrerer Blendenelemente vorgeschlagen, die in einem Querschnitt des Verbindungsrohrs angeordnet sind, derart, dass das Verbindungsrohr für Luftschall durchlässig bleibt, während die Blendenelemente den Querschnitt des Verbindungsrohrs in einer parallel zur Längsmittelachse des Verbindungsrohrs verlaufenden Blickrichtung blickdicht verschließen. Mit Hilfe der Blendenelemente kann somit ebenfalls effektiv ein Durchtritt von Wärmestrahlung durch das Verbindungsrohr hindurch verhindert werden, während die Ausbreitung des Luftschalls durch das Verbindungsrohr weitgehend ungehindert ist. Auch hierdurch lässt sich die thermische Belastung des Wandlers signifikant reduzieren. Die Verwendung derartiger Blendenelemente ermöglicht es dabei, ein geradliniges Verbindungsrohr zu verwenden, das besonders preiswert realisierbar ist und dementsprechend bevorzugt ist. Grundsätzlich lassen sich die hier vorgeschlagenen, alternativen Lösungen auch miteinander kombinieren, sodass einerseits ein gekrümmtes Verbindungsrohr vorgesehen ist, dessen Querschnitt andererseits mit wenigstens einem Blendenelement in der Blickrichtung blickdicht verschlossen ist.

Die Verwendung solcher Blendenelemente erhöht gleichzeitig die thermische Masse des Verbindungsrohrs im Bereich der Blendenelemente, so dass sich eine thermische Belastung nur zeitlich verzögert bzw. gedämpft vom Abgasrohr in Richtung Schalldämpfergehäuse ausbreiten kann.

Entsprechend einer vorteilhaften Ausführungsform kann vorgesehen sein, dass das Verbindungsrohr zwischen dem Schalldämpfergehäuse und dem Abgasrohr einen Abschnitt aufweist, der den Querschnitt des Verbindungsrohrs enthält, der mittels des wenigstens einen Blendenelements in der Blickrichtung blickdicht verschlossen ist, wobei dieser Abschnitt ein bzgl. des Verbindungsrohrs separater Rohrkörper ist, der in das Verbindungsrohr eingebaut ist. Hierdurch vereinfacht sich die Variantenbildung zur Anpassung des Verbindungsrohrs an unterschiedliche Einbausituationen, wobei stets der gleiche Anschnitt bzw. Rohrkörper verwendet werden kann, um den blickdichten Querschnittsbereich zu realisieren.

Gemäß einer anderen vorteilhaften Ausführungsform kann vorgesehen sein, die Blendenelemente in einem Kühlerabschnitt des Verbindungsrohrs anzuordnen, sodass die Blendenelemente im Kühlerabschnitt für Luftschall durchlässig angeordnet sind und den Querschnitt des Kühlerabschnitts in einer parallel zur Längsmittelachse des Kühlerabschnitts verlaufenden Blickrichtung blickdicht verschließen. Durch die Positionierung der Blendenelemente im Kühlerabschnitt kann die durch Wärmestrahlung auf die Blendenelemente übertragene Wärme von den Blendenelementen auf eine den Querschnitt des Verbindungsrohrs in Umfangsrichtung umfassende Kühlerwand des Kühlerabschnitts abgeleitet und durch eine ggf. vorgesehene Kühlung des Kühlerabschnitts abgeführt werden. Insoweit lässt sich durch die Positionierung der Blendenelemente im Kühlerabschnitt eine Kühlung der Blendenelemente realisieren, was die Effizienz des thermischen Schutzes des Wandlers verbessert. Auch hier ist von besonderer Bedeutung, dass die Blendenelemente zur Erhöhung der thermischen Masse des Kühlerabschnitts beiträgt. Bei einer Kombination der beiden vorstehend vorgestellten Ausführungsformen entspricht der als separater Rohrkörper ausgestaltete Abschnitt des Verbindungsrohrs dem Kühlerabschnitt, der dann in Form des separaten Rohrkörpers in das Verbindungsrohr eingebaut ist.

Das jeweilige Blendenelement kann zweckmäßig ein Blechkörper sein, der sich durch eine hohe Wärmeleitfähigkeit und Hitzebeständigkeit auszeichnet. Zweckmäßig sind mehrere derartige als Blechkörper ausgestaltete Blendenelemente vorgesehen, die von einer Rohrwand des Verbindungsrohrs oder von der zuvor genannten Kühlerwand des Kühlerabschnitts nach innen vorstehen. Alternativ zu mehreren Blendenelementen, die jeweils für sich von der Rohrwand bzw. von der Kühlwand nach innen abstehen, kann gemäß einer nicht erfindungsgemäßen Ausführungsform ein einzelnes Blendenelement durch ein Lochblech gebildet sein, das den Querschnitt des Verbindungsrohrs bzw. des Kühlerabschnitts verschließt, wobei die Löcher des Lochblechs durch das Ausstellen von Laschen gebildet sein können, wobei besagte Laschen zweckmäßig derart ausgestellt sind, dass sie die zugehörigen Öffnungen in der Blickrichtung versperren.

Entsprechend einer bevorzugten Ausführungsform sind die Blendenelemente dagegen als Schaufeln ausgestaltet, die gegenüber der Längsmittelachse angestellt sind. Derartige Schaufeln, die in einem durchströmten Rohr - was hier beim Verbindungsrohr nicht der Fall ist - auch als Leitschaufeln bezeichnet werden können, zeichnen sich durch einen vergleichsweise geringen akustischen Widerstand aus, sodass die Schaufeln den Schallausbreitungspfad nur geringfügig behindern.

Erfindungsgemäß sind die Blendenelemente sternförmig angeordnet, wodurch sich eine Rotationssymmetrie für die Wechselwirkung der Blendenelemente mit dem Schallausbreitungspfad ergibt. Erfindungsgemäß stützen sich die sternförmig angeordneten Blendenelemente in einem gemeinsamen Zentrum aneinander ab. Ein gemeinsames Zentrum ermöglicht die Realisierung der Blendenelemente als Einheit, die in den jeweiligen Querschnitt als separates Bauteil eingesetzt werden kann. Sofern die sternförmig angeordneten Blendenelemente als Schaufeln ausgestaltet sind, kann die Anordnung der Blendenelemente wie ein statischer Mischer und insbesondere in Form eines Drallerzeugers ausgestaltet sein. Da das Verbindungsrohr vom Abgas nicht durchströmt ist, erfolgt im Bereich der Blendenelemente keine Durchmischung bzw. Drallerzeugung, jedoch ein blickdichtes Verschließen des jeweiligen Querschnitts bei offenem und weitgehend ungehindertem Schallausbreitungspfad.

Entsprechend einer anderen vorteilhaften Ausführungsform können sich die Blendenelemente zumindest entlang der Kühlerwand in der Längsrichtung des Verbindungsrohrs bzw. des Kühlerabschnitts und in der Umfangsrichtung erstrecken. Somit folgt der Schallausbreitungspfad einer gekrümmten Bahn, die für die Schallausbreitung ein vernachlässigbares Hindernis darstellt und die für die geradlinige Wärmestrahlung dagegen ein unüberwindbares Hindernis darstellt.

Gemäß einer anderen zweckmäßigen Ausführungsform kann eine Anströmkante eines Blendenelements eine Abströmkante eines benachbarten Blendenelements in der Blickrichtung überlappen oder damit in der Blickrichtung fluchten. Auf diese Weise wird besonders einfach erreicht, dass die einzelnen Blendenelemente jeweils für sich einen Abschnitt des Querschnitts des Verbindungsrohrs bzw. des Kühlerabschnitts in der Blickrichtung versperren, derart, dass alle Blendenelemente zusammen den gesamten Querschnitt in der Blickrichtung blickdicht verschließen, während gleichzeitig zwischen benachbarten Blendenelementen ausreichend Lücken bzw. Abstände vorhanden sind, die einen weitgehend ungehinderten Durchtritt für Luftschall ermöglichen.

Gemäß einer anderen vorteilhaften Ausführungsform kann der zuvor genannte Kühlerabschnitt mehrere Kühlrippen aufweisen, die von der Kühlerwand des Kühlerabschnitts nach außen abstehen. Durch diese Maßnahme wird die für die Wärmeabstrahlung zur Verfügung stehende Oberfläche des Kühlerabschnitts signifikant vergrößert, was die Abgabe von Wärme in die Umgebung des Verbindungsrohrs verbessert.

Gemäß einer zweckmäßigen Weiterbildung können die Kühlrippen parallel zur Längsmittelachse des Kühlerabschnitts ausgerichtet sein und sternförmig oder zueinander parallel angeordnet sein. Die sternförmige Anordnung verbessert die Wärmeabstrahlung. Die parallele Anordnung vereinfacht dagegen die Herstellbarkeit des Kühlerabschnitts mit den Kühlrippen als integrale Einheit, insbesondere als Gussteil.

Gemäß einer anderen vorteilhaften Ausführungsform kann ein Kühlluftstromerzeuger vorgesehen sein, der einen den Kühlerabschnitt von außen beaufschlagenden Kühlluftstrom erzeugt. Auf diese Weise wird der Kühlerabschnitt aktiv gekühlt, nämlich durch den speziell dafür erzeugten Kühlluftstrom. Alternativ ist es grundsätzlich möglich, den Kühlerabschnitt mit einem Kühlmantel auszustatten, der an einen Kühlkreis angeschlossen ist, in dem ein Kühlmittel, vorzugsweise eine Kühlflüssigkeit, zirkuliert. Bspw. kann ein derartiger Kühlkreis mit einem Kühlkreis der Brennkraftmaschine gekoppelt sein.

Entsprechend einer anderen vorteilhaften Ausführungsform kann das jeweilige Blendenelement als Hohlkörper ausgestaltet sein und von einem Kühlmittel, vorzugsweise von einer Kühlflüssigkeit, durchströmbar sein. Das jeweilige Blendenelement ist dabei durch die Kühlerwand des Kühlerabschnitts hindurch an einen Kühlkreis angeschlossen, in dem das Kühlmittel zirkuliert. Insbesondere kann dieser Kühlkreis mit einem Kühlkreis der Brennkraftmaschine gekoppelt sein. Außerdem ist es grundsätzlich möglich, die aktiv mit einem Kühlmittel gekühlten Blendenelemente mit dem vorstehend genannten Kühlmantel zum Kühlen des Kühlerabschnitts zu kombinieren.

Gemäß einer anderen vorteilhaften Ausführungsform kann der zuvor genannte Kühlerabschnitt ein bzgl. des Verbindungsrohrs separater Rohrkörper sein, der auf geeignete Weise in das Verbindungsrohr eingebaut ist, bspw. über Schweißverbindungen oder über Flanschverbindungen. Hierdurch ist es insbesondere möglich, den Kühlerabschnitt aus einem anderen Material herzustellen als das Verbindungsrohr. Bspw. kann das Verbindungsrohr aus einer Eisenlegierung bzw. aus einer Stahllegierung hergestellt sein, während der Rohrkörper des Kühlerabschnitts aus einer Leichtmetalllegierung hergestellt ist, die sich durch eine deutlich bessere Wärmeleitfähigkeit auszeichnet. Darüber hinaus ermöglicht der separate Rohrkörper des Kühlerabschnitts eine Ausführungsform, bei welcher das Verbindungsrohr beiderseits des Kühlerabschnitts aus unterschiedlichen Materialien hergestellt ist. So kann das Verbindungsrohr bspw. vom Kühlerabschnitt bis zum Abgasrohr aus einem metallischen Werkstoff hergestellt sein, während es vom Kühlerabschnitt zum Schalldämpfergehäuse aus einem Kunststoff hergestellt sein kann.

Gemäß einer anderen vorteilhaften Ausführungsform kann das jeweilige Blendenelement integral an der Rohrwand des Verbindungsrohrs oder an der Kühlwand des Kühlerabschnitts ausgeformt sein. Die integrale Bauweise erleichtert dabei die Herstellung des aktiven Schalldämpfers bzw. der Abgasanlage. Insbesondere wird durch die integrale Bauweise die Realisierung des vorstehend genannten Rohrkörpers als monolithisches Gussteil vereinfacht. Zusätzlich oder alternativ können die vorstehend genannten Kühlrippen des Kühlerabschnitts integral an besagter Kühlwand ausgeformt sein, was auch hier eine preiswerte Herstellung als Gussteil vereinfacht. Insbesondere kann somit der Kühlerabschnitt in Form eines monolithischen Rohrkörpers realisiert werden, der integral das wenigstens eine Blendenelement und optional außerdem die Kühlrippen umfassen kann.

Gemäß einer anderen, nicht erfindungsgemäßen Lösung wird vorgeschlagen, das Verbindungsrohr gekrümmt auszuführen, derart, dass durch das Verbindungsrohr hindurch kein geradliniger, vom Abgasrohr zum Schalldämpfergehäuse durchgehender Strahlungsweg vorhanden ist. Somit kann eine direkte Aufheizung des Wandlers durch Wärmestrahlung vermieden werden. Hierzu kann das Verbindungsrohr z.B. einen 90°-Bogen oder einen S-Bogen aufweisen. Auch in diesem Fall kann das Verbindungsrohr einen Kühlerabschnitt aufweisen, der aktiv und/oder passiv gekühlt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

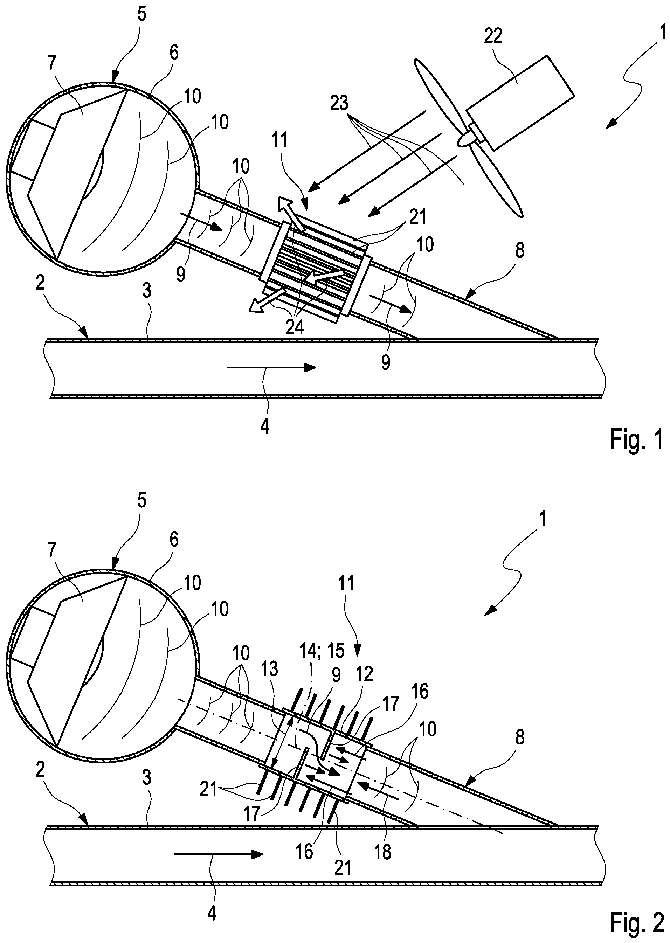

Die Fig. 1 und 6 bis 11 zeigen erfindungsgemäße Ausführungsformen während die Fig. 2 bis 5, 12 und 13 nicht erfindungsgemäße Ausführungsformen zeigen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung einer Abgasanlage im Bereich eines aktiven Schalldämpfers,
- Fig. 2: eine Ansicht wie in Fig. 1 bei längsgeschnittenem Kühlerabschnitt,
- Fig. 3: eine Ansicht wie in Fig. 1, jedoch bei einer anderen Ausführungsform,
- Fig. 4: eine Ansicht wie in Fig. 3, jedoch bei einer weiteren Ausführungsform,
- Fig. 5: einen stark vereinfachten Längsschnitt durch den Kühlerabschnitt,
- Fig. 6: einen Kühlerabschnitt im Querschnitt,
- Fig. 7: eine isometrische Ansicht des Kühlerabschnitts aus Fig. 6,
- Fig. 8: eine Seitenansicht des Kühlerabschnitts aus Fig. 6,
- Fig. 9: ein Querschnitt des Kühlerabschnitts wie in Fig. 6, jedoch bei einer anderen Ausführungsform,
- Fig. 10: eine isometrische Ansicht des Kühlerabschnitts aus Fig. 9,
- Fig. 11: eine Seitenansicht des Kühlerabschnitts aus Fig. 9,
- Fig. 12: ein stark vereinfachter Längsschnitt der Abgasanlage im Bereich eines Kühlerabschnitts bei einer anderen Ausführungsform,
- Fig. 13: ein Längsschnitt wie in Fig. 12, jedoch bei einer weiteren Ausführungsform.

Entsprechend den Figuren 1 bis 4 umfasst eine hier nur teilweise dargestellte Abgasanlage 1, die bei einer Brennkraftmaschine, die vorzugsweise in einem Kraftfahrzeug angeordnet ist, zum Abführen von Abgas dient, zumindest einen Abgasstrang 2, der zumindest ein abgasführendes Abgasrohr 3 aufweist. Eine Abgasströmung im Abgasrohr 3 ist in den Figuren 1 und 2 durch einen Pfeil angedeutet und mit 4 bezeichnet. Die Abgasanlage 1 umfasst zumindest einen aktiven Schalldämpfer 5. Dieser weist ein Schalldämpfergehäuse 6 und zumindest einen elektro-akustischen Wandler 7 auf, der im Schalldämpfergehäuse 6 angeordnet ist. Ferner ist ein Verbindungsrohr 8 vorgesehen, über das der Schalldämpfer 5 akustisch an das Abgasrohr 3 angeschlossen ist. Zu diesem Zweck verbindet das Verbindungsrohr 8 das Schalldämpfergehäuse 6 fluidisch mit dem Abgasrohr 3. Das Verbindungsrohr 8 definiert hierzu einen durch Pfeile angedeuteten Schallausbreitungspfad 9, der im Verbindungsrohr 8 ausgebildet ist und der eine Ausbreitung von Luftschall ermöglicht. In den Figuren 1 bis 4 sind Druckpulsationen 10 angedeutet, die eine Ausbreitung von Luftschall entlang des Schallausbreitungspfads 9 vom Wandler 7 in Richtung Abgasrohr 3 repräsentieren. Diese Druckpulse 10 sind phasenverschoben zu Druckpulsationen eines zu bedämpfenden Schalls, der im Abgasstrom 4 mitgeführt wird.

Im gezeigten, bevorzugten Beispiel der Abgasanlage 1 umfasst das Verbindungsrohr 8 einen Kühlerabschnitt 11, der im Verbindungsrohr 8 zwischen dem Schalldämpfergehäuse 6 und dem Abgasrohr 3 angeordnet ist. Bei einer anderen Ausführungsform kann ein derartiger Kühlerabschnitt 11 grundsätzlich entbehrlich sein.

Entsprechend den Figuren 1 bis 13 umfasst der Kühlerabschnitt 11 eine Kühlerwand 12, die einen Querschnitt 13 des Verbindungsrohrs 8 bzw. einen Querschnitt 13 des Kühlerabschnitts 11 in der Umfangsrichtung vollständig umschließt. Ferner besitzt der Kühlerabschnitt 11 einen geradlinigen Aufbau und weist dementsprechend eine geradlinige Längsmittelachse 14 auf, die in der in den Fig. 1 und 2 gezeigten, bevorzugten Ausführungsform, bei welcher das Verbindungsrohr 8 geradlinig ausgestaltet ist, mit einer Längsmittelachse 15 des Verbindungsrohrs 8 zusammenfällt.

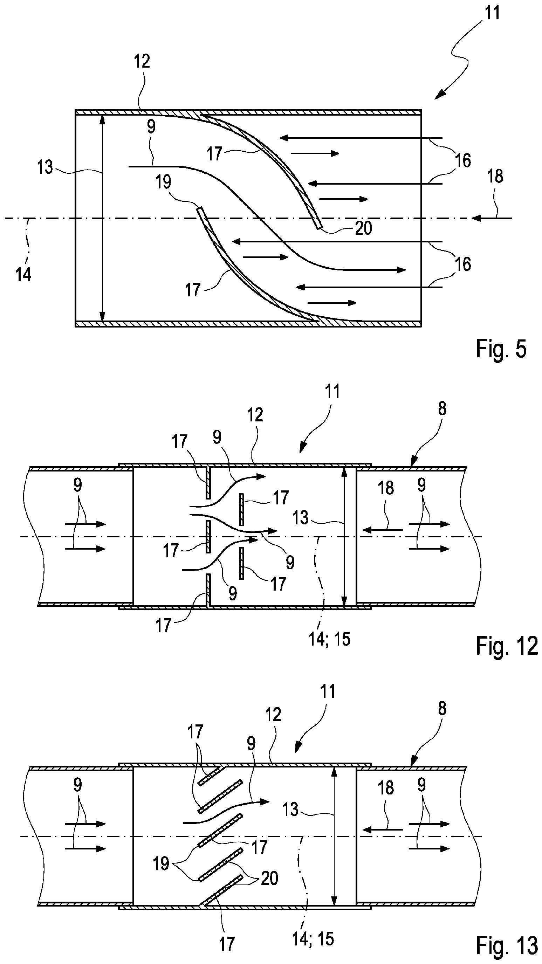

Der Schallausbreitungspfad 9 ist für eine in den Figuren 2 und 5 durch Pfeile angedeutete Wärmestrahlung 16, die vom Abgas bzw. vom Abgasstrom 4 im Abgasrohr 3 ausgeht, undurchlässig ausgestaltet. Hierdurch kann die thermische Belastung des Wandlers 7 durch Wärmestrahlung 16 erheblich reduziert werden.

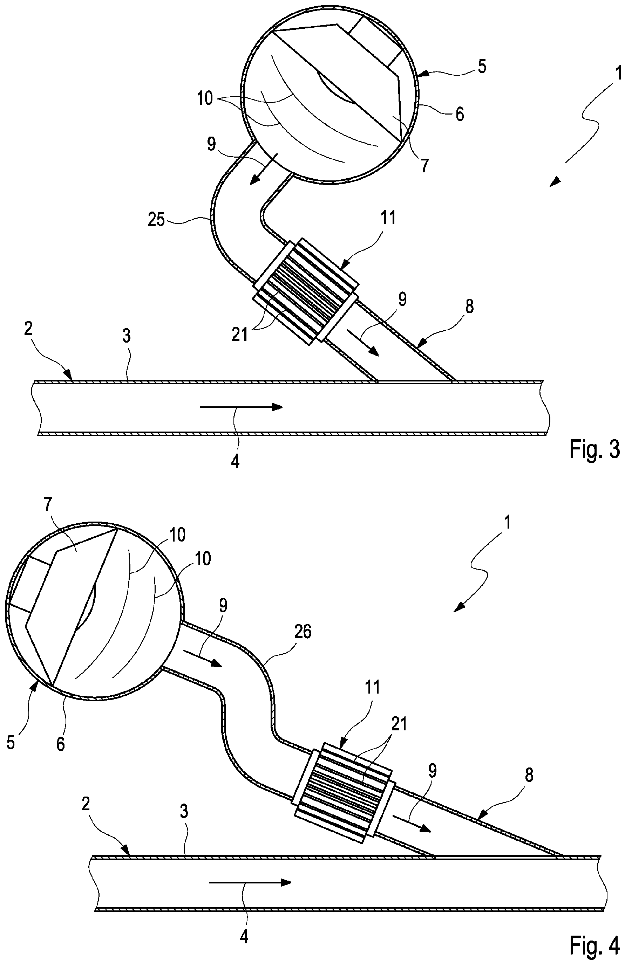

In einem besonders einfachen Fall, der hier in den Fig. 3 und 4 gezeigt ist, kann der Schallausbreitungspfad 9 für die Wärmestrahlung 16 dadurch undurchlässig konzipiert werden, dass das Verbindungsrohr 8 gekrümmt ausgeführt wird, derart, dass durch das Verbindungsrohr 8 hindurch keine geradlinige Verbindung unbehindert vom Abgasrohr 3 zum Schalldämpfergehäuse 6 führt. Beispielsweise zeigt Fig. 3 hierzu ein Verbindungsrohr 8, das zwischen dem Abgasrohr 3 und dem Schalldämpfergehäuse 6 einen 90°-Bogen 25 aufweist, der eine geradlinige Ausbreitung der Wärmestrahlung vom Abgasrohr 3 zum Schalldämpfergehäuse 6 verhindert. Fig. 4 zeigt eine Variante, bei welcher das Verbindungsrohr 8 einen S-förmigen Bogen 26 oder S-Bogen 26 bzw. S-Schlag 26 aufweist, der ebenso eine geradlinige Ausbreitung von Wärmestrahlung vom Abgasrohr 3 zum Schalldämpfergehäuse 6 verhindert.

Im Unterschied dazu wird bei den in den Fig. 1 und 2 gezeigten Ausführungsformen ein geradliniges Verbindungsrohr 8 verwendet. Die nachfolgend beschriebenen Merkmale sind jedoch grundsätzlich auch bei einem gekrümmten Verbindungsrohr 8 realisierbar.

Um den Schallausbreitungspfad 9 bei einem geradlinigem Verbindungsrohr 8 für die Wärmestrahlung 16 undurchlässig auszugestalten, sind im Querschnitt 13 des Verbindungsrohrs 8 bzw. des Kühlerabschnitts 11 hier mehrere Blendenelemente 17 vorgesehen, die im Verbindungsrohr 8 bzw. hier im Kühlerabschnitt 11 so angeordnet sind, dass die Anordnung der Blendenelemente 17 für den Luftschall durchlässig ist, während sie den Querschnitt 13 des Kühlerabschnitts 11 in einer Blickrichtung 18, die parallel zur Längsmittelachse 14 des Kühlerabschnitts 11 verläuft, blickdicht verschließt. Obwohl bei den hier gezeigten Ausführungsbeispielen stets mehrere Blendenelemente 17 vorgesehen sind, ist grundsätzlich auch eine Ausführungsform denkbar, bei der nur ein einziges Blendenelement 17 vorhanden ist, um den Querschnitt 13 blickdicht zu versperren.

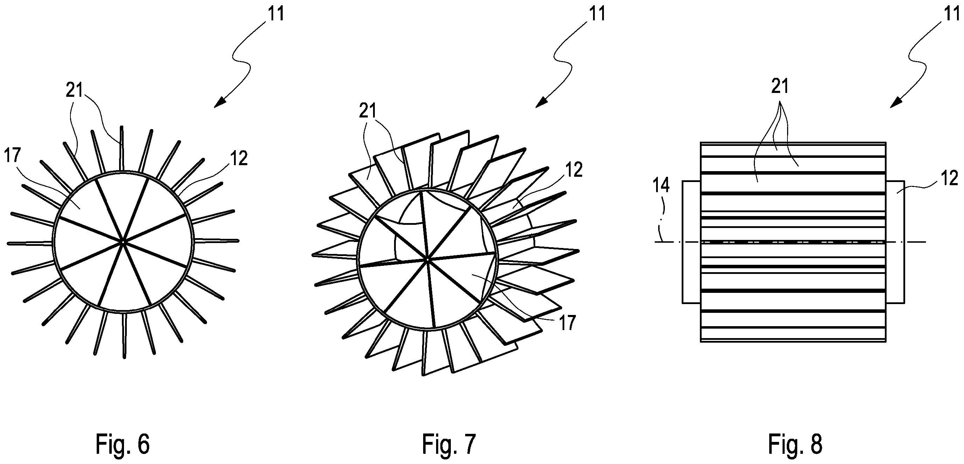

Die Blendenelemente 17 sind zweckmäßig aus einem metallischen Werkstoff hergestellt. Bspw. kann es sich um Blechkörper handeln. Die Blendenelemente 17 stehen von der Kühlerwand 12 nach innen ab und ragen somit in den Querschnitt 13 hinein. Bei den hier gezeigten Ausführungsformen sind die Blendenelemente 17 jeweils als Schaufeln ausgestaltet, die gegenüber der Längsmittelachse 14 angestellt sind. Zweckmäßig können die Blendenelemente 17 gemäß den Ausführungsformen der Figuren 6 bis 11 sternförmig angeordnet sein, wobei sich die einzelnen Blendenelemente 17 radial innen in einem gemeinsamen Zentrum aneinander abstützen können. Ebenso ist es möglich, die Blendenelemente 17 so anzuordnen, dass sie radial innen freistehend sind, sich gegenseitig also nicht berühren. Bei den Ausführungsformen der Figuren 6 bis 11 sind die Blendenelemente 17 so angeordnet, dass sie die Struktur eines Drallerzeugers besitzen. Generell können die Blendenelemente 17 nach Art eines statischen Mischers angeordnet sein.

Die Figuren 2, 12 und 13 zeigen Ausführungsformen, bei denen die Blendenelemente 17 als geradlinige Schaufeln ausgestaltet sind, die zueinander parallel verlaufen. Die Blendenelemente 17 der Figuren 2 und 12 sind dabei gegenüber der Längsmittelachse 14 mit 90° angestellt, sodass sie sich mit ihrer Fläche senkrecht zur Längsmittelachse 14 erstrecken. Des Weiteren sind bei den Ausführungsformen der Figuren 2 und 12 die Blendenelemente 17 in der Axialrichtung, also parallel zur Längsmittelachse 14 zueinander versetzt angeordnet. Des Weiteren sind die axial zueinander versetzten Blendenelemente 17 außerdem quer zur Längsmittelachse 14 zueinander versetzt, derart, dass sich in der Blickrichtung 18 die gewünschte blickdichte Versperrung des Querschnitts 13 ergibt.

Bei der in Fig. 13 gezeigten Ausführungsform sind die schaufelförmigen Blendenelemente 17, die sich parallel zueinander erstrecken, mit etwa 45° gegenüber der Längsmittelachse 14 angestellt. Ferner sind die Blendenelemente 17 hier so dimensioniert, dass sich in der Blickrichtung 18 eine Überlappung zum blickdichten Versperren des Querschnitts 13 einstellt.

Bei den hier gezeigten Ausführungsformen der Figuren 2 und 5 bis 13, vorzugsweise der Figuren 5 bis 11 und 13 ist eine erste Kante 19 eines Blendenelements 17 in der Blickrichtung 18 überlappend oder fluchtend angeordnet zu einer zweiten Kante 20 eines benachbarten Blendenelements 17. Die erste Kante 19 ist dabei dem Schalldämpfergehäuse 6 zugewandt, während die zweite Kante 20 vom Schalldämpfergehäuse 6 abgewandt ist.

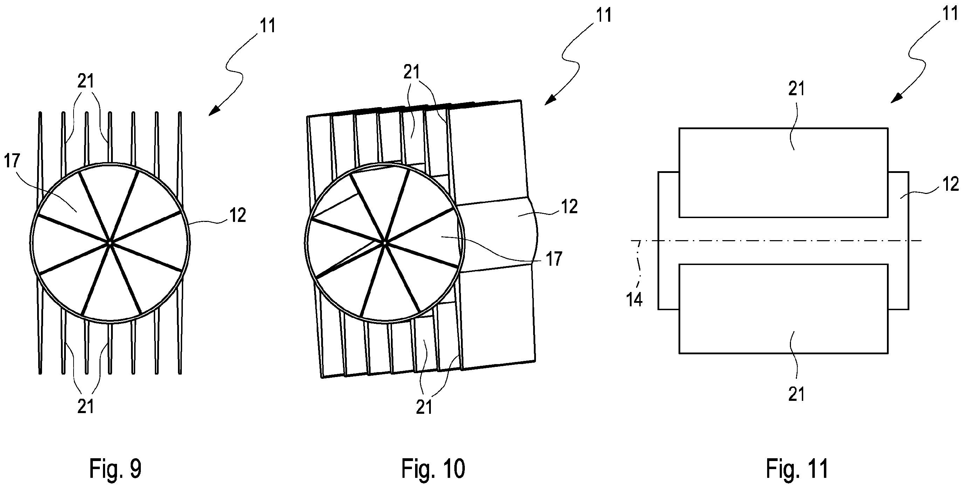

Entsprechend den Figuren 1 bis 4 und 6 bis 11 weist der Kühlerabschnitt 11 zweckmäßig mehrere Kühlrippen 21 auf, die von der Kühlerwand 12 nach außen abstehen. Gemäß den Figuren 1 und 3 bis 11 sind die Kühlrippen 21 zweckmäßig parallel zur Längsmittelachse 14 des Kühlerabschnitts 11 ausgerichtet. Alternativ dazu zeigt Fig. 2 eine Ausführungsform, bei welcher die Kühlrippen 21 ringförmig ausgestaltet sind und sich in der Umfangsrichtung sowie senkrecht zur Längsmittelachse 14 des Kühlerabschnitts 11 erstrecken. Bei den Ausführungsformen der Figuren 1 und 3 bis 8 erstrecken sich die Kühlrippen 21 sternförmig. Bei der in den Figuren 9 bis 11 gezeigten Ausführungsform erstrecken sich die Kühlrippen 21 dagegen parallel zueinander.

In Fig. 1 ist außerdem ein Kühlluftstromerzeuger 22 gezeigt, der hier durch ein Gebläse angedeutet ist. Mit Hilfe des Kühlluftstromerzeugers 22 kann ein Kühlluftstrom 23 erzeugt werden, der hier durch Pfeile angedeutet ist und der den Kühlerabschnitt 11 von außen beaufschlagt. Hierdurch kann gemäß Pfeilen 24 Wärme in die Umgebung abgeführt werden.

Zweckmäßig handelt es sich beim Kühlerabschnitt 11 um einen bzgl. des Verbindungsrohrs 8 separaten Rohrkörper, der auf geeignete Weise in das Verbindungsrohr 8 eingebaut ist, vergleiche insbesondere die Darstellungen der Figuren 12 und 13. Insbesondere können dabei die Blendenelemente 17 und/oder die Kühlrippen 21 an der Kühlerwand 12 integral ausgeformt sein. Zweckmäßig handelt es sich beim Kühlerabschnitt 11 somit um ein monolithisches Gussteil, das die Kühlerwand 12 und die Blendenelemente 17 und optional die Kühlrippen 21 integral umfasst.

Durch die für die Wärmestrahlung 16 undurchlässige Ausgestaltung des Schallausbreitungspfads 9 bzw. durch die blickdichte Anordnung der Blendenelemente 17 wird gemäß den Figuren 2 und 5 die vom Abgasrohr 3 kommende Wärmestrahlung 16 an den Blendenelementen 17 zum Teil reflektiert und zum Teil absorbiert. Die reflektierte Wärme trägt nicht zur Aufheizung der Blendenelemente 17 bei. Die absorbierte Wärme heizt dagegen die Blendenelemente 17 auf. Aufgrund ihrer Wärmeleitfähigkeit können die Blendenelemente 17 die absorbierte Wärme auf die Kühlerwand 12 übertragen. Von der Kühlerwand 12 gelangt die aufgenommene Wärme in den Beispielen in die Kühlrippen 21 und kann von diesen in die Umgebung abgestrahlt werden. Ggf. kann diese Wärmeabgabe durch den Kühlluftstrom 23 unterstützt werden. Optional kann auch vorgesehen sein, dass die Blendenelemente 17 an einen Kühlkreis angeschlossen sind, in dem ein flüssiges Kühlmittel zirkuliert, so dass die Blendenelemente 17 von diesem Kühlmittel durchströmt sind.

## Patentansprüche

1. Abgasanlage für eine Brennkraftmaschine, insbesondere eines Kraftfahrzeugs,
- mit mindestens einem Abgasstrang (2), der zumindest ein abgasführendes Abgasrohr (3) aufweist,
- mit mindestens einem aktiven Schalldämpfer (5), der ein Schalldämpfergehäuse (6) und wenigstens einen im Schalldämpfergehäuse (6) angeordneten elektro-akustischen Wandler (7) sowie wenigstens ein geradliniges Verbindungsrohr (8) aufweist, das das Schalldämpfergehäuse (6) fluidisch mit dem Abgasrohr (3) verbindet,
- wobei ein für die Ausbreitung von Luftschall im Verbindungsrohr (8) ausgebildeter Schallausbreitungspfad (9) für vom Abgas im Abgasrohr (3) ausgehende Wärmestrahlung (16) undurchlässig ausgestaltet ist,
- wobei im Querschnitt (13) des Verbindungsrohrs (8) mehrere Blendenelemente (17) angeordnet sind, die von einer Rohrwand des geradlinigen Verbindungsrohrs (8) nach innen abstehen und die im Verbindungsrohr (8) für Luftschall durchlässig angeordnet sind,
- wobei die Blendenelemente (17) den Querschnitt (13) des Verbindungsrohrs (8) in einer parallel zur Längsmittelachse (15) des Verbindungsrohrs (8) verlaufenden Blickrichtung (18) blickdicht verschließen,
**dadurch gekennzeichnet,**
- **dass** die Blendenelemente (17) sternförmig angeordnet sind und sich in einem gemeinsamen Zentrum aneinander abstützen.

2. Abgasanlage nach Anspruch 1,
**dadurch gekennzeichnet,**
**dass** das Verbindungsrohr (8) zwischen dem Schalldämpfergehäuse (6) und dem Abgasrohr (3) einen Abschnitt (11) aufweist, der den Querschnitt (13) des Verbindungsrohrs (8) enthält, der mittels der Blendenelemente (17) in der Blickrichtung (18) blickdicht verschlossen ist, wobei dieser Abschnitt (11) ein bzgl. des Verbindungsrohrs (8) separater Rohrkörper ist, der in das Verbindungsrohr (8) eingebaut ist.

3. Abgasanlage nach Anspruch 1 oder 2,
**dadurch gekennzeichnet,**
**dass** die Blendenelemente (17) als Schaufeln ausgestaltet sind.

4. Abgasanlage nach Anspruch 3,
**dadurch gekennzeichnet,**
**dass** die Schaufeln gegenüber der Längsmittelachse (14;15) angestellt sind und/oder geradlinig ausgestaltet sind.

5. Abgasanlage nach einem der Ansprüche 1 bis 4,
**dadurch gekennzeichnet,**
**dass** sich die Blendenelemente (17) zumindest entlang der Rohrwand oder der Kühlerwand (12) in der Längsrichtung des Verbindungsrohrs (8) oder des Kanalabschnitts (11) und in der Umfangsrichtung erstrecken.

6. Abgasanlage nach einem der Ansprüche 1 bis 5,
**dadurch gekennzeichnet,**
- **dass** das Verbindungsrohr (8) zwischen dem Schalldämpfergehäuse (6) und dem Abgasrohr (3) einen Kühlerabschnitt (11) aufweist, der eine den Querschnitt (13) des Verbindungsrohrs (8) in Umfangsrichtung umschließende Kühlerwand (12) aufweist,
- **dass** im Kühlerabschnitt (11) zumindest ein Blendenelement (17) angeordnet ist,
- **dass** das wenigstens eine Blendenelement (17) im Kühlerabschnitt (11) für Luftschall durchlässig angeordnet ist,
- **dass** das wenigstens eine Blendenelement (17) den Querschnitt (13) des Kühlerabschnitts (11) in einer parallel zur Längsmittelachse (14) des Kühlerabschnitts (11) verlaufenden Blickrichtung (18) blickdicht verschließt.

7. Abgasanlage nach Anspruch 6,
**dadurch gekennzeichnet,**
**dass** der Kühlerabschnitt (11) mehrere Kühlrippen (21) aufweist, die von der Kühlerwand (12) nach außen abstehen.

8. Abgasanlage nach Anspruch 7,
**dadurch gekennzeichnet,**
**dass** die Kühlrippen (21) parallel zur Längsmittelachse (14) des Kühlerabschnitts (11) ausgerichtet sind und sternförmig oder zueinander parallel angeordnet sind.

9. Abgasanlage nach einem der Ansprüche 6 bis 8,
**dadurch gekennzeichnet,**
**dass** ein Kühlluftstromerzeuger (22) vorgesehen ist, der einen den Kühlerabschnitt (11) von außen beaufschlagenden Kühlluftstrom (23) erzeugt.

10. Abgasanlage nach einem der Ansprüche 6 bis 9,
**dadurch gekennzeichnet,**
**dass** der Kühlerabschnitt (11) ein bzgl. des Verbindungsrohrs (8) separater Rohrkörper ist, der in das Verbindungsrohr (8) eingebaut ist.

11. Abgasanlage nach einem der Ansprüche 6 bis 10,
**dadurch gekennzeichnet,**
**dass** das jeweilige Blendenelement (17) integral an der Rohrwand oder an der Kühlerwand (12) ausgeformt ist.

12. Abgasanlage nach einem der Ansprüche 6 bis 11,
**dadurch gekennzeichnet,**
**dass** die Kühlrippen (21) integral an der Kühlwand (12) ausgeformt sind.

## Claims

1. An exhaust system for an internal combustion engine, in particular of a motor vehicle,
- having at least one exhaust tract (2), which has at least one exhaust pipe (3) which conducts exhaust gas,
- having at least one active silencer (5), which has a silencer housing (6) and at least one electro-acoustic converter (7) arranged in the silencer housing (6), and at least one straight-lined connection pipe (8) which connects the silencer housing (6) fluidically to the exhaust pipe (3),
- wherein a sound propagation path (9) formed for the propagation of airborne noise in the connection pipe (8) is impermeable to thermal radiation (16) emanating from the exhaust gas in the exhaust pipe (3),
- wherein several screen elements (17) are arranged in the cross section (13) of the connection pipe (8), which screen elements project inwardly from a pipe wall of the straight-lined connection pipe (8) and are arranged in the connection pipe (8) to be permeable to airborne noise,
- wherein the screen elements (17) close off the cross section (13) of the connection pipe (8) in an opaque manner in a viewing direction (18) running parallel to the longitudinal centre axis (15) of the connection pipe (8),
**characterized in that**
- the screen elements (17) are arranged in a star-shaped manner and support each other in a common centre.

2. The exhaust gas system according to Claim 1,
**characterised in that**
the connection pipe (8) has a section (11) between the silencer housing (6) and the exhaust pipe (3), which contains the cross section (13) of the connection pipe (8) which is closed off in an opaque manner in the viewing direction (18) by means of the screen elements (17), wherein this section (11) is a tubular body which is separate from the connection pipe (8) and is installed in the connection pipe (8).

3. The exhaust system according to Claim 1 or 2,
**characterised in that**
the screen elements (17) are configured as vanes which are placed at an angle to the longitudinal centre axis (14; 15).

4. The exhaust system according to Claim 3,
**characterised in that**
the vanes are placed at an angle to the longitudinal centre axis (14; 15) and/or are straight.

5. The exhaust system according to one of Claims 1 to 4,
**characterised in that**
the screen elements (17) extend at least along the pipe wall or the cooler wall (12) in the longitudinal direction of the connection pipe (8) or of the channel section (11) and in the circumferential direction.

6. The exhaust system according to any one of Claims 1 to 5,
**characterised in that**
- the connection pipe (8) has a cooler section (11) between the silencer housing (6) and the exhaust pipe (3), which cooler section has a cooler wall (12) which encloses the cross section (13) of the connection pipe (8) in the circumferential direction,
- at least one screen element (17) is arranged in the cooler section (11),
- the at least one screen element (17) is arranged in the cooler section (11) such that it is permeable to airborne noise,
- the at least one screen element (17) closes off the cross section (13) of the cooler section (11) in an opaque manner in a viewing direction (18) which runs parallel to the longitudinal centre axis (14) of the cooler section (11).

7. The exhaust system according to Claim 6,
**characterised in that**
the cooler section (11) has a plurality of cooling ribs (21) which project outwards from the cooler wall (12).

8. The exhaust system according to Claim 7,
**characterised in that**
the cooling ribs (21) are aligned parallel to the longitudinal centre axis (14) of the cooler section (11) and are arranged in a star-shaped manner or parallel to each other.

9. The exhaust system according to one of Claims 6 to 8,
**characterised in that**
a cooling airstream generator (22) is provided, which generates a cooling airstream (23) which is applied to the cooler section (11) from the outside.

10. The exhaust system according to one of Claims 6 to 9,
**characterised in that**
the cooling section (11) is a tubular body which is separate from the connection pipe (8) and is installed in the connection pipe (8).

11. The exhaust system according to one of Claims 6 to 10,
**characterised in that**
the respective screen element (17) is formed integrally on the pipe wall or on the cooler wall (12).

12. The exhaust system according to one of Claims 6 to 11,
**characterised in that**
the cooling ribs (21) are formed integrally on the cooling wall (12).

## Revendications

1. Installation de gaz d'échappement pour un moteur à combustion interne, en particulier d'un véhicule automobile,
- avec au moins une ligne de gaz d'échappement (2), qui présente au moins un tuyau d'échappement (3) conduisant le gaz d'échappement,
- avec au moins un silencieux (5) actif, qui présente un boîtier de silencieux (6) et au moins un convertisseur électro-acoustique (7) agencé dans le boîtier de silencieux (6) ainsi qu'au moins un tube de liaison (8) rectiligne, qui relie fluidiquement le boîtier de silencieux (6) au tuyau d'échappement (3),
- dans laquelle un trajet de propagation du son (9) réalisé pour la propagation de bruit aérien dans le tube de liaison (8) est configuré de manière imperméable pour le rayonnement thermique (16) partant du gaz d'échappement dans le tuyau d'échappement (3),
- dans laquelle plusieurs éléments d'écran (17), qui font saillie d'une paroi de tube du tube de liaison (8) rectiligne vers l'intérieur et qui sont agencés dans le tube de liaison (8) de manière perméable pour le bruit aérien, sont agencés dans la coupe transversale (13) du tube de liaison (8),
- dans laquelle les éléments d'écran (17) ferment de manière opaque la coupe transversale (13) du tube de liaison (8) dans le sens du regard (18) s'étendant parallèlement à l'axe médian longitudinal (15) du tube de liaison (8),
**caractérisée en ce que**
- que les éléments d'écran (17) sont agencés en étoile et s'appuient l'un contre l'autre dans un centre commun.

2. Installation de gaz d'échappement selon la revendication 1,
**caractérisée en ce**
**que** le tube de liaison (8) présente entre le boîtier de silencieux (6) et le tuyau d'échappement (3) une section (11), qui contient la coupe transversale (13) du tube de liaison (8), qui est fermé de manière opaque dans le sens du regard (18) au moyen des éléments d'écran (17), dans laquelle cette section (11) est un corps de tube séparé par rapport au tube de liaison (8), qui est intégré dans le tube de liaison (8).

3. Installation de gaz d'échappement selon la revendication 1 ou 2,
**caractérisée en ce**
**que** les éléments d'écran (17) sont configurés en tant que pales.

4. Installation de gaz d'échappement selon la revendication 3,
**caractérisée en ce**
**que** les pales sont appliquées par rapport à l'axe médian longitudinal (14; 15) et/ou sont configurées de manière rectiligne.

5. Installation de gaz d'échappement selon l'une quelconque des revendications 1 à 4,
**caractérisée en ce**
**que** les éléments d'écran (17) s'étendent au moins le long de la paroi de tube ou de la paroi de refroidisseur (12) dans la direction longitudinale du tube de liaison (8) ou de la section de conduite (11) et dans la direction circonférentielle.

6. Installation de gaz d'échappement selon l'une quelconque des revendications 1 à 5,
**caractérisée en ce**
- **que** le tube de liaison (8) présente entre le boîtier de silencieux (6) et le tuyau d'échappement (3) une section de refroidisseur (11), qui présente une paroi de refroidisseur (12) entourant dans le sens circonférentiel la coupe transversale (13) du tube de liaison (8),
- **qu'**au moins un élément d'écran (17) est agencé dans la section de refroidisseur (11),
- **que** l'au moins un élément d'écran (17) est agencé de manière perméable pour le bruit aérien dans la section de refroidisseur (11),
- **que** l'au moins un élément d'écran (17) ferme la section (13) de la section de refroidisseur (11) de manière opaque dans le sens du regard (18) s'étendant parallèlement à l'axe médian longitudinal (14) de la section de refroidisseur (11).

7. Installation de gaz d'échappement selon la revendication 6,
**caractérisée en ce**
**que** la section de refroidisseur (11) présente plusieurs nervures de refroidissement (21), qui font saillie de la paroi de refroidisseur (12) vers l'extérieur.

8. Installation de gaz d'échappement selon la revendication 7,
**caractérisée en ce**
**que** les nervures de refroidissement (21) sont orientées parallèlement à l'axe médian longitudinal (14) de la section de refroidisseur (11) et sont agencées en étoile ou parallèlement l'une à l'autre.

9. Installation de gaz d'échappement selon l'une quelconque des revendications 6 à 8,
**caractérisée en ce**
**qu'**un générateur de courant d'air de refroidissement (22) est prévu, qui génère un courant d'air de refroidissement (23) sollicitant la section de refroidisseur (11) de l'extérieur.

10. Installation de gaz d'échappement selon l'une quelconque des revendications 6 à 9,
**caractérisée en ce**
**que** la section de refroidisseur (11) est un corps de tube séparé par rapport au tube de liaison (8), qui est monté dans le tube de liaison (8).

11. Installation de gaz d'échappement selon l'une quelconque des revendications 6 à 10,
**caractérisée en ce**
**que** l'élément d'écran (17) respectif est formé d'un seul tenant au niveau de la paroi de tube ou au niveau de la paroi de refroidisseur (12).

12. Installation de gaz d'échappement selon l'une quelconque des revendications 6 à 11,
**caractérisée en ce**
**que** les nervures de refroidissement (21) sont formées d'un seul tenant au niveau de la paroi de refroidissement (12).
